# EUROPEAN PATENT SPECIFICATION

(11) **EP 1 438 694 B1**
(45) Date of publication and mention of the grant of the patent: **18.07.2007**
(21) Application number: 02770364.4
(22) Date of filing: 23.09.2002
(51) Int. Cl.: G06K 9/22, G06F 3/033

(54) **METHOD AND DEVICE FOR PROCESSING OF INFORMATION**
VERFAHREN UND EINRICHTUNG ZUR VERARBEITUNG VON INFORMATIONEN
PROCEDE ET DISPOSITIF DE TRAITEMENT D'INFORMATIONS

(30) Priority: 21.09.2001 SE 0103178
(43) Date of publication of application: 21.07.2004
(73) Proprietor: Anoto AB, 223 69 Lund (SE)
(72) Inventor: LYNGGAARD, Stefan, S-223 63 Lund (SE)
(74) Representative: Perklev, Karin Cecilia
(86) International application number: PCT/SE2002/001729
(87) International publication number: WO 2003/025839

(56) References cited:
- WO-A-01/16691
- WO-A1-01/48591
- WO-A1-01/48678
- WO-A1-01/48685

## Description

### FIELD OF INVENTION

The present invention relates to a method and a device for processing of information coupled to a position code on a surface, the position code coding a plurality of positions on the surface. The invention also relates to a computer program for processing of position data.

### PRIOR ART

Techniques for providing a surface with a position code, and various applications of the surface provided with the position code, are known per se, for example from the Patent publication WO 01/16691 which is hereby incorporated in the present specification by reference. The underlying idea is that it is possible to provide a surface with a position code, which codes a large number of positions on the surface, and to read the code with a special device which also can be used as a conventional pen. When a user writes with the pen, the device electronically records the position of the pen all the time.

The position data generated in this way can be used in a great many ways, for example to permit reproduction of the text or drawn images, etc., which the user creates on a display such as a computer screen. Another possibility which is that of providing the surface with at least one activation icon which causes the recording device to initiate a predetermined operation which utilizes the information recorded by the device. Examples of such operations are sending e-mail, with text which is part of the information, entering calendar information which is part of the information in an electronic calendar, etc.

However, the use of the activation icon is limited because of the single value information which it contains.

WO 01/48685 discloses a system for information management comprising a look-up unit, in which are stored particulars about a plurality of regions, each of which represents an area on at least one imaginary surface and is allocated an address. A user unit records electronically information which comprises one or more positions on the imaginary surface and sends all or parts of the recorded information to the look-up unit. When the look-up unit receives the recorded information, it identifies, based on the position content of the recorded information, a region on the imaginary surface and sends the address which is allocated to the identified region to the user unit.

### SUMMARY OF THE INVENTION

The object of the invention is to develop the usability of an area with information.

According to one aspect of the invention, the object is achieved with a device for processing of information according to claim 1.

According to another aspect of the invention, the object is achieved with a method for processing of a position according to claim 5.

In accordance with the invention, it is therefore possible to obtain a value area which contains value-added information and to use the multiple information to effect active control. The control can, for example, be effected on the device itself.

According to one embodiment of the device and method, the control signal is used for multiple-state indication, said indication being controlled by the level of the control signal. In other words, the indicator indicates one of a plurality of states depending on which level the control signal has. Since the level is in turn related to the set of values which includes a plurality of values, for example more than two, this opens up several possibilities of indicating levels of internal phenomena in the device, as will be explained in more detail below.

In accordance with the invention, it is thus possible to convey relatively complex information to the user using only a single indicator which can occupy one of two or more states. The complexity is created by the values with which the coded positions are associated. According to one embodiment of the device, the user can find out about internal states of the device. These can include battery voltage, available memory, etc. The set of values then represents a scale, i.e. a range, of values, and an expedient selection of the values which are spread across the range can be indicated on the surface in connection with, i.e. in or adjacent to, the value area. When the device is moved across the value area, and thus along the scale, the indicator changes state just when the current value is passed. The user can read off the current value at the place where the device is situated at that instant or estimate the value with the aid of values which are indicated in proximity to the location.

Another advantage of the invention finds expression in embodiments where the control signal is used for setting functions of the device, the level of the control signal determining the setting. For example, signalprocessing functions, such as the degree of compression for data storage, can be set in the device.

### BRIEF DESCRIPTION OF THE DRAWINGS

Further objects, features and advantages of the invention will become appearent from the following detailed description of the invention and embodiments thereof with reference to the accompanying drawings, in which:
Fig. 1 is a schemtic view showing an embodiment of the device according to the invention and an example of a surface;
Fig. 2 is a schemtic view showing different variants of value areas; and
Fig. 3 is a schematic view showing information exchange between the device according to the invention and a second device.

### DETAILED DESCRIPTION OF EMBODIMENTS OF THE INVENTION

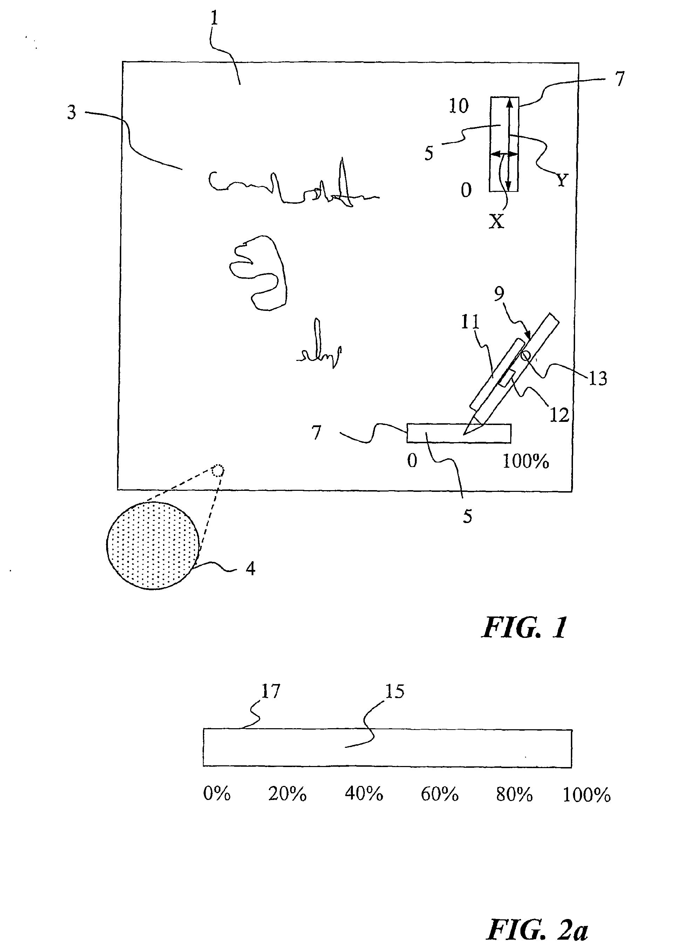

Fig. 1 discloses a product in the form of a sheet of paper 1 with a surface 3. At least part of the surface is printable/ writable and at least part of the surface is provided with a position code in the form of, for example, a dot pattern of the type which is described in WO 01/16691 and is illustrated in an enlarged area at 4 in Fig. 1. The dots are displaced in relation to a virtual raster in such a way that different positions on the surface are coded uniquely. The geometry of the dot pattern is designed such that a good resolution is obtained. It should be noted that, for reasons of clarity, the dot pattern is not shown other than in the enlarged area.

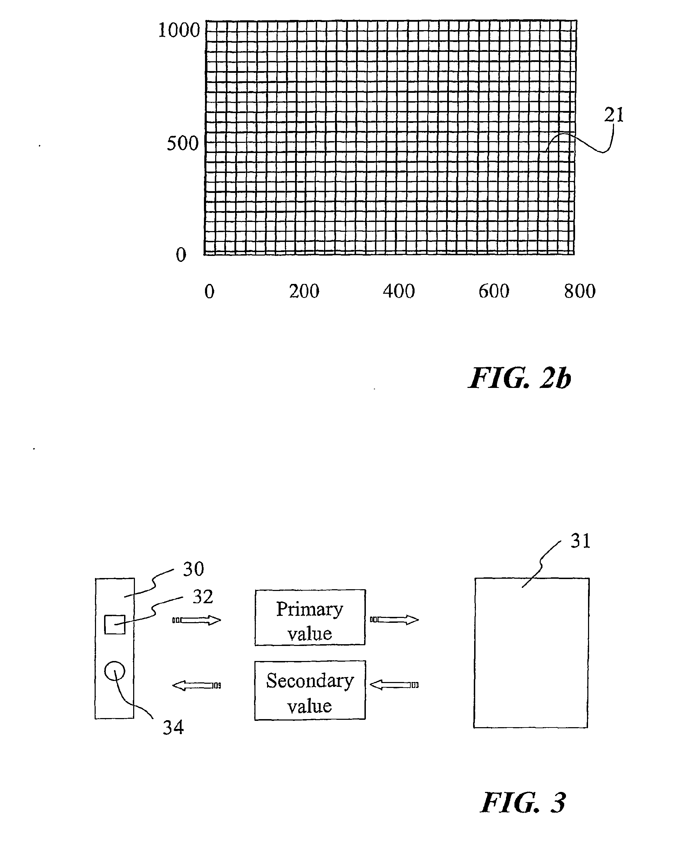

Several value areas 5 are defined on the surface 3. In this embodiment, they are marked by indications, i.e. printed/written markings 7, as is shown in a very schematic way in Fig. 1 and illustrated in more detail in Fig. 2, so that a user can see them.

In this embodiment, the surface 3 is writable and a device 9 for processing of information, which device is designed as a pen, is used for writing on the surface. The pen 9 is provided with a reading unit 11, for example a camera, which reads the position of the pen 9 on the surface, and a processor 12 which is connected to the reading unit 11 and which is adapted to store and analyze data generated by the reading unit 11. In other words, the reading unit 11 reads the position code, i.e. the dot pattern, and generates data which thus includes position information, which data is processed by the processor 12.

It is appreciated that the pen 9 includes a memory unit and a battery even though this is not shown. The pen 9 also has an indicator 13. In the embodiment shown, the indicator 13 is a light-emitting diode which can emit light in several different colors, among others red, green and blue. However, the simplest variant is an indicator with two states, such as on/off or green/red or blinking/steady-state. Other examples of indicators are ones which generate sound or generate vibrations.

Associated with each value area 5 there is a set of values. The set of values contains a plurality of values which can relate to many different factors. Each position in a value area 5 is associated with a value in the set of values. The value area 5 may have an extent in two directions, as is illustrated in Fig. 1 by the arrows X and Y.

Fig. 2a shows a case where the value area 15 is rectangular, its borders being shown by a rectangle 17, and the values in one direction are identical, whereas the values in the other direction range across an interval with the lowest value at one end of the area 15 and the highest value at the other end of the area 15. The values represent one of several conceivable types of information. In the example shown, the type of information represents information concerning a property of the pen 9, more specifically 0-100 percent of the battery charge of the battery of the pen 9. Some values (0, 20, 40, 60, 80 and 100 percent) are printed close to the value area 15 on the surface and more specifically alongside the value area 15. Now assume, by way of example, that the battery has 60% of its power remaining. Via a charge sensor, the processor 12 receives data concerning the current battery charge. When a user places the tip of the pen 9 at one end of the value area 15 which represents the value 0 percent, the reading unit 11 reads the current position on the surface. The processor 12 analyzes position data from the reading unit 11, compares it with pre-programmed information concerning the extent of the value area 15, confirms that the current position lies within the value area 15, and, as a result of this, generates an indication. More specifically, the processor generates a control signal with a first level which corresponds to the current position lying above or below the current charge. The control signal activates the indicator 13 so that it is set to a first active state in which it generates a green light. When the pen 9 is moved towards the other end of the value area 15, the indicator 13 continues to show a green light until the position for 60% is passed, whereupon the processor changes the level of the control signal to a second level which sets the indicator to a second active state in which it generates a red light. If the pen 9 is moved back, the indicator 13 reverts to green. The user can establish where the change-over takes place and can read the value 60% at the change-over position. It is of course immaterial where the pen 9 is situated along the second direction of the value area 15, i.e. vertically in Fig. 2a, since the positions which lie one after the other in this direction are associated with the same value.

There are many other conceivable internal properties which can be illustrated in a corresponding manner. For example, the available storage capacity of the memory can be shown. If the pen includes a container with writing fluid, for example ink, the container can be provided with a sensor which generates a level value and sends it to the processor 12. Thus, a value area can be used to show how much of the container is filled.

Just as the value area can be used to give the user information, as has been described above, it can be used to give the user the possibility of setting functions of the pen 9. One example is where the level of the control signal corresponds to the degree of compression for storing information in the pen's memory. In this example, a value area is used which in fact represents the degree of compression, and the user can select the degree of compression by placing the pen at a corresponding position in the value area.

Fig. 2b shows a value area 21 where the positions are associated with different values in both directions. Each coded position is thus associated with a value which comprises two parts.

Instead of representing absolute values or values which are relative with respect to a highest value, as the percentages above, it is possible for the values in the set of values to be relative with respect to an existing level. One example is the setting of the sound volume of an internal acoustic indicator, where one part of the value area and the associated set of values represents an increase of the existing sound volume, and the other part represents a decrease. Another example is the setting/adjustment of the above-mentioned degree of compression for storing information in the memory of the pen 9, where different parts of the set of values can represent increasing or decreasing of the degree of compression, which is then done for example by setting the level of the control signal high or low as a function of the current value.

The pen can also be adapted to detect a direction of movement when it is moved across a value area. In the example just described, with relative values in relation to a previously set level, one application of the movement detection is where the pen movement in one direction in the value area represents an increase in the level, whereas a movement in the other direction represents a decrease in the level. The detection of movement can be achieved, for example, by the pen storing a sequence of a plurality of positions which the pen passes without being lifted, and the direction of movement is determined with the aid of the position sequence.

Fig. 3 shows another embodiment of the pen designated 30. In this embodiment the pen 30 can exchange information with another device, such as a server 31, via the transceiver 32. The pen 30 then sends primary information, in the form of a value associated with a position and consisting of position data for a read-off position code, to the server 31 which processes the received primary information, by coupling position data to a value in a set of values for the current value area, and sends back secondary information, which in turn is used to generate a control signal which activates the indicator 34.

Thus, the actual value in the set of values can be determined either in the pen 9, 30, 41 or in another device, such as a server. In the last-mentioned case, it can be purely the position information that is forwarded to another device. However, the information which is sent to the other device can also be a variant of or an addition to the position data, such as an identity number, for the value area in which the current position lies. In this case, information on the ID number and on the extent of all the value areas has been stored in advance in the pen.

It is also possible to conceive of applications in which there is no representation of any value in the value area and/or in which the value area is not visibly marked on the surface.

At least parts of the processing of read-off position data may be carried out under the control of a computer program which is input into the pen's memory and which is executed by the processor. The computer program can also be made available on another storage medium, such as a diskette. Examples of a stepped sequence formulated with executable instructions are the steps of establishing that the position code for a read-off coded position lies within the value area; determining the value in the set of values which is associated with the read-off coded position; and initiating the generation of a control signal whose level is related to the determined value. The software is easy to update or to replace all or some of the software stored in the pen as and when required and as a function of how the pen is to be used. The above description of embodiments does not constitute a limiting example of how the invention can be realized. Many modifications are possible within the scope of the invention as it is defined in the appended claims. The invention is only limited by the appended patent claims.

## Claims

1. A device for processing of information, which device comprises a processor (12) and a reading unit (11) for electronic reading of information on a surface (3), which is provided with a position code which codes a plurality of positions on the surface, the reading unit being adapted to read the position code and generate a position based thereon, **characterized in that** the device is adapted to associate positions coded by the position code within a value area (5; 15; 21) which is defined on the surface with values in a set of values which includes a plurality of values and which represents information concerning an internal property of the device, and to initiate the generation of a control signal with a level that is related to the value associated with the generated position and the internal property of the device.

2. The device as claimed in claim 1, further comprising a multiple-state indicator (13; 34), the indication of which is controlled by the level of the control signal.

3. The device as claimed in claim 1 or 2, in which the processor (12) is adapted to set a function in the device by means of the control signal.

4. The device as claimed in claim 1, 2 or 3, in which the processor (12) is adapted to generate the control signal.

5. The device as claimed in any one of claims 1-4, further comprising a transceiver (32) for sending the generated position to an external device (31) and for receiving a secondary value from the external device, the control signal being generated on the basis of the secondary value.

6. The device as claimed in any one of the preceding claims, in which the values in the set of values form a scale.

7. The device as claimed in claim 6, in which the scale represents relative values.

8. The device as claimed in claim 7, in which the values are relative in relation to a pre-set level.

9. The device as claimed in any one of the preceding claims, in which the value area has an extent in two directions, and wherein positions in one direction are associated with a first plurality of different values and positions in the other direction are associated with a second plurality of different values.

10. The device as claimed in any one of the preceding claims, in which the device is adapted to detect a direction of movement for movement of the device across the value area.

11. The device as claimed in any one of the preceding claims, in which the device stores pre-programmed information concerning the extent of the value area provided on the surface.

12. The device as claimed in any one of the preceding claims, further comprising a sensor for sensing a current value of the internal property.

13. The device as claimed in claim 12, wherein the processor is adapted to generate the control signal with a first level when the generated position is associated with a value above the current value of the internal property and a control signal with a second level when the generated position is associated with a value below the current value of the internal property.

14. A computer program for processing a position obtained by a device from a surface (3) which is provided with a position code which codes a plurality of positions on the surface, and which surface comprises a value area (5; 15; 21), positions coded by the position code within the value area defined on the surface being associated with values in a set of values which includes a plurality of values and which represents information concerning an internal property of the device which computer program is stored on a computer-readable storage medium and includes instructions for causing the computer to:
confirm that the obtained position lies within the value area (5; 15; 21);
determine the value in the set of values which is associated with the obtained position; and
initiate the generation of a control signal with a level that is related to the determined value and the internal property of the device.

15. A method for processing of a position obtained by a device from a surface (3) which is provided with a position code which codes a plurality of positions on the surface, and which surface comprises a value area (5; 15; 21), positions coded by the position code within the value area defined on the surface being associated with values in a set of values which includes a plurality of values and which represents information concerning an internal property of the device, the method comprising:
reading the position code to obtain a position which lies within the value area (5; 15; 21);
determining the value in the set of values which is associated with the obtained position; and
initiating the generation of a control signal with a level that is related to the determined value and the internal property of the device.

16. The method as claimed in claim 15, further comprising: generating an indication in the form of one of a plurality of states, said indication being controlled by the control signal.

17. The method as claimed in claim 15, in which the device is a device for processing of information which includes a reading unit, in which the steps are carried out with the aid of the device and in which the step of determining comprises sending information coupled to the obtained position from the device to another device which determines the value in the set of values on the basis of the information.

18. The method as claimed in claim 17, in which said other device generates the control signal.

19. The method as claimed in claim 17, in which said other device sends the determined value to said device for processing of information.

20. The method as claimed in any one of claims 15-19, further comprising: using the control signal for controlling either an indication or an internal function of said device for processing of information.

21. The method as claimed in any one of claims 15-20, further comprising sensing a current value of the internal property.

22. The method as claimed in claim 21, further comprising generating the control signal with a first level when the obtained position is associated with a value above the current value of the internal property and the control signal with a second level when the obtained position is associated with a value below the current value of the internal property.

## Patentansprüche

1. Vorrichtung zur Verarbeitung von Informationen, wobei die Vorrichtung aufweist: einen Prozessor (12) und eine Leseeinheit (11) zum elektronischen Lesen von Informationen auf einer Fläche (3), welche mit einem Positionscode versehen ist, welcher eine Vielzahl von Positionen auf der Fläche codiert, wobei die Leseeinheit so ausgebildet ist, dass sie den Positionscode liest und anhand desselben eine Position erzeugt, **dadurch gekennzeichnet, dass** die Vorrichtung so ausgebildet ist, dass sie Positionen, die durch den Positionscode innerhalb eines Wertebereiches (5; 15; 21) codiert sind, welcher auf der Fläche definiert ist, mit Werten in einer Menge von Werten verknüpft, welche eine Vielzahl von Werten enthält und welche Informationen repräsentiert, die eine innere Eigenschaft der Vorrichtung betreffen, und dass sie die Erzeugung eines Steuersignals mit einem Pegel auslöst, welcher zu dem mit der erzeugten Position verknüpften Wert und der inneren Eigenschaft der Vorrichtung in Beziehung steht.

2. Vorrichtung nach Anspruch 1, welche ferner eine Anzeigevorrichtung mit mehreren Zuständen (13; 34) aufweist, deren Anzeige durch den Pegel des Steuersignals gesteuert wird.

3. Vorrichtung nach Anspruch 1 oder 2, bei welcher der Prozessor (12) so ausgebildet ist, dass er mittels des Steuersignals eine Funktion in der Vorrichtung einstellt.

4. Vorrichtung nach Anspruch 1, 2 oder 3, bei welcher der Prozessor (12) so ausgebildet ist, dass er das Steuersignal erzeugt.

5. Vorrichtung nach einem der Ansprüche 1-4, welche ferner einen Sender-Empfänger (32) zum Senden der erzeugten Position an eine externe Vorrichtung (31) und zum Empfangen eines sekundären Wertes von der externen Vorrichtung aufweist, wobei das Steuersignal auf der Grundlage des sekundären Wertes erzeugt wird.

6. Vorrichtung nach einem der vorhergehenden Ansprüche, bei welcher die Werte in der Menge von Werten eine Skala bilden.

7. Vorrichtung nach Anspruch 6, bei welcher die Skala relative Werte repräsentiert.

8. Vorrichtung nach Anspruch 7, bei welcher die Werte relative Werte bezüglich eines voreingestellten Niveaus sind.

9. Vorrichtung nach einem der vorhergehenden Ansprüche, bei welcher der Wertebereich eine Ausdehnung in zwei Richtungen hat, und wobei Positionen in einer Richtung mit einer ersten Vielzahl von verschiedenen Werten verknüpft sind und Positionen in der anderen Richtung mit einer zweiten Vielzahl von verschiedenen Werten verknüpft sind.

10. Vorrichtung nach einem der vorhergehenden Ansprüche, wobei die Vorrichtung so ausgebildet ist, dass sie eine Bewegungsrichtung für eine Bewegung der Vorrichtung durch den Wertebereich erkennt.

11. Vorrichtung nach einem der vorhergehenden Ansprüche, wobei die Vorrichtung vorprogrammierte Informationen speichert, welche die Ausdehnung des Wertebereiches betreffen, der auf der Fläche vorgesehen ist.

12. Vorrichtung nach einem der vorhergehenden Ansprüche, welche ferner einen Sensor zum Erfassen eines aktuellen Wertes der inneren Eigenschaft aufweist.

13. Vorrichtung nach Anspruch 12, wobei der Prozessor so ausgebildet ist, dass er das Steuersignal mit einem ersten Pegel erzeugt, wenn die erzeugte Position mit einem Wert über dem aktuellen Wert der inneren Eigenschaft verknüpft ist, und ein Steuersignal mit einem zweiten Pegel, wenn die erzeugte Position mit einem Wert unter dem aktuellen Wert der inneren Eigenschaft verknüpft ist.

14. Computerprogramm zur Verarbeitung einer Position, die durch eine Vorrichtung von einer Fläche (3) erhalten wurde, welche mit einem Positionscode versehen ist, welcher eine Vielzahl von Positionen auf der Fläche codiert, und wobei die Fläche einen Wertebereich (5; 15; 21) aufweist, wobei Positionen, die durch den Positionscode innerhalb des auf der Fläche definierten Wertebereiches codiert sind, mit Werten in einer Menge von Werten verknüpft sind, welche eine Vielzahl von Werten enthält und welche Informationen repräsentiert, die eine innere Eigenschaft der Vorrichtung betreffen, wobei das Computerprogramm auf einem computerlesbaren Speichermedium gespeichert ist und Anweisungen enthält, um den Computer zu veranlassen:
zu bestätigen, dass die erhaltene Position innerhalb des Wertebereiches (5; 15; 21) liegt;
den Wert in der Menge von Werten zu bestimmen, welcher mit der erhaltenen Position verknüpft ist; und
die Erzeugung eines Steuersignals mit einem Pegel auszulösen, welcher zu dem bestimmten Wert und der inneren Eigenschaft der Vorrichtung in Beziehung steht.

15. Verfahren zur Verarbeitung einer Position, die durch eine Vorrichtung von einer Fläche (3) erhalten wurde, welche mit einem Positionscode versehen ist, welcher eine Vielzahl von Positionen auf der Fläche codiert, und wobei die Fläche einen Wertebereich (5; 15; 21) aufweist, wobei Positionen, die durch den Positionscode innerhalb des auf der Fläche definierten Wertebereiches codiert sind, mit Werten in einer Menge von Werten verknüpft sind, welche eine Vielzahl von Werten enthält und welche Informationen repräsentiert, die eine innere Eigenschaft der Vorrichtung betreffen, wobei das Verfahren beinhaltet:
Lesen des Positionscodes, um eine Position zu erhalten, welche innerhalb des Wertebereiches (5; 15; 21) liegt;
Bestimmen des Wertes in der Menge von Werten, welcher mit der erhaltenen Position verknüpft ist; und
Auslösen der Erzeugung eines Steuersignals mit einem Pegel, welcher zu dem bestimmten Wert und der inneren Eigenschaft der Vorrichtung in Beziehung steht.

16. Verfahren nach Anspruch 15, welches ferner beinhaltet: Erzeugen einer Anzeige in der Form eines von mehreren Zuständen, wobei die Anzeige durch das Steuersignal gesteuert wird.

17. Verfahren nach Anspruch 15, wobei die Vorrichtung eine Vorrichtung zur Verarbeitung von Informationen ist, welche eine Leseeinheit aufweist, wobei die Schritte mit Hilfe der Vorrichtung ausgeführt werden und wobei der Schritt des Bestimmens das Senden von Informationen, die mit der erhaltenen Position verknüpft sind, von der Vorrichtung zu einer anderen Vorrichtung beinhaltet, welche den Wert in der Menge von Werten auf der Grundlage der Informationen bestimmt.

18. Verfahren nach Anspruch 17, wobei die andere Vorrichtung das Steuersignal erzeugt.

19. Verfahren nach Anspruch 17, wobei die andere Vorrichtung den bestimmten Wert zu der Vorrichtung zur Verarbeitung von Informationen sendet.

20. Verfahren nach einem der Ansprüche 15-19, welches ferner beinhaltet: Verwenden des Steuersignals zum Steuern entweder einer Anzeige oder einer inneren Funktion der Vorrichtung zur Verarbeitung von Informationen.

21. Verfahren nach einem der Ansprüche 15-20, welches ferner das Erfassen eines aktuellen Wertes der inneren Eigenschaft beinhaltet.

22. Verfahren nach Anspruch 21, welches ferner das Erzeugen des Steuersignals mit einem ersten Pegel, wenn die erhaltene Position mit einem Wert über dem aktuellen Wert der inneren Eigenschaft verknüpft ist, und des Steuersignals mit einem zweiten Pegel, wenn die erhaltene Position mit einem Wert unter dem aktuellen Wert der inneren Eigenschaft verknüpft ist, beinhaltet.

## Revendications

1. Dispositif pour le traitement d'informations, lequel dispositif comprend un processeur (12) et une unité de lecture (11) pour la lecture électronique d'informations sur une surface (3) qui est pourvue d'un code de position qui code une pluralité de positions sur la surface, l'unité de lecture étant adaptée de façon à lire le code de position et à produire une position basée sur celui-ci, **caractérisé en ce que** le dispositif est adapté de façon à associer les positions codées par le code de position au sein d'une zone de valeurs (5 ; 15 ; 21) qui est définie sur la surface avec des valeurs dans un ensemble de valeurs qui comprend une pluralité de valeurs et qui représente des informations concernant une propriété interne du dispositif, et à déclencher la production d'un signal de commande avec un niveau qui est lié à la valeur associée à la position produite et à la propriété interne du dispositif.

2. Dispositif selon la revendication 1, comprenant en outre un indicateur à états multiples (13 ; 34), dont l'indication est commandée par le niveau du signal de commande.

3. Dispositif selon la revendication 1 ou 2, dans lequel le processeur (12) est adapté de façon à régler une fonction dans le dispositif au moyen du signal de commande.

4. Dispositif selon la revendication 1, 2 ou 3, dans lequel le processeur (12) est adapté de façon à produire le signal de commande.

5. Dispositif selon l'une quelconque des revendications 1 à 4, comprenant en outre un émetteur-récepteur (32) pour envoyer la position produite à un dispositif externe (31) et pour recevoir une valeur secondaire du dispositif externe, le signal de commande étant produit en se basant sur la valeur secondaire.

6. Dispositif selon l'une quelconque des revendications précédentes, dans lequel les valeurs dans l'ensemble de valeurs forment une échelle.

7. Dispositif selon la revendication 6, dans lequel l'échelle représente des valeurs relatives.

8. Dispositif selon la revendication 7, dans lequel les valeurs sont relatives par rapport à un niveau préréglé.

9. Dispositif selon l'une quelconque des revendications précédentes, dans lequel la zone de valeurs a une étendue dans deux directions, et dans lequel les positions dans une direction sont associées à une première pluralité de valeurs différentes et les positions dans l'autre direction sont associées à une deuxième pluralité de valeurs différentes.

10. Dispositif selon l'une quelconque des revendications précédentes, dans lequel le dispositif est adapté de façon à détecter une direction de mouvement pour le mouvement du dispositif sur la zone de valeurs.

11. Dispositif selon l'une quelconque des revendications précédentes, dans lequel le dispositif mémorise des informations préprogrammées concernant l'étendue de la zone de valeurs fournie sur la surface.

12. Dispositif selon l'une quelconque des revendications précédentes, comprenant en outre un capteur pour détecter une valeur courante de la propriété interne.

13. Dispositif selon la revendication 12, dans lequel le processeur est adapté de façon à produire le signal de commande avec un premier niveau lorsque la position produite est associée à une valeur supérieure à la valeur courante de la propriété interne et un signal de commande avec un deuxième niveau lorsque la position produite est associée à une valeur inférieure à la valeur courante de la propriété interne.

14. Programme informatique pour traiter une position obtenue par un dispositif à partir d'une surface (3) qui est pourvue d'un code de position qui code une pluralité de positions sur la surface, et laquelle surface comporte une zone de valeurs (5 ; 15 ; 21), les positions codées par le code de position au sein de la zone de valeurs définie sur la surface étant associées à des valeurs dans un ensemble de valeurs qui comprend une pluralité de valeurs et qui représente des informations concernant une propriété interne du dispositif, lequel programme informatique est mémorisé sur un support de stockage lisible par ordinateur et comprend des instructions pour faire en sorte que l'ordinateur :
confirme que la position obtenue se trouve au sein de la zone de valeurs (5 ; 15 ; 21) ;
détermine la valeur dans l'ensemble de valeurs qui est associée à la position obtenue ; et
déclenche la production d'un signal de commande avec un niveau qui est lié à la valeur déterminée et à la propriété interne du dispositif.

15. Procédé pour traiter une position obtenue par un dispositif à partir d'une surface (3) qui est pourvue d'un code de position qui code une pluralité de positions sur la surface, et laquelle surface comporte une zone de valeurs (5 ; 15 ; 21), les positions codées par le code de position au sein de la zone de valeurs définie sur la surface étant associées à des valeurs dans un ensemble de valeurs qui comprend une pluralité de valeurs et qui représente des informations concernant une propriété interne du dispositif, ce procédé comprenant :
la lecture du code de position de façon à obtenir une position qui se trouve au sein de la zone de valeurs (5 ; 15 ; 21) ;
la détermination de la valeur dans l'ensemble de valeurs qui est associée à la position obtenue ; et
le déclenchement de la production d'un signal de commande avec un niveau qui est lié à la valeur déterminée et à la propriété interne du dispositif.

16. Procédé selon la revendication 15, comprenant en outre : la production d'une indication sous la forme d'un état parmi une pluralité d'états, ladite indication étant commandés par le signal de commande.

17. Procédé selon la revendication 15, dans lequel le dispositif est un dispositif pour traiter des informations qui comprend une unité de lecture, dans lequel les étapes sont exécutées à l'aide du dispositif et dans lequel l'étape de détermination comprend l'envoi d'informations associées à la position obtenue du dispositif à un autre dispositif qui détermine la valeur dans l'ensemble de valeurs en se basant sur les informations.

18. Procédé selon la revendication 17, dans lequel ledit autre dispositif produit le signal de commande.

19. Procédé selon la revendication 17, dans lequel ledit autre dispositif envoie la valeur déterminée audit dispositif pour le traitement d'informations.

20. Procédé selon l'une quelconque des revendications 15 à 19, comprenant en outre : l'utilisation du signal de commande pour commander soit une indication, soit une fonction interne dudit dispositif pour le traitement d'informations.

21. Procédé selon l'une quelconque des revendications 15 à 20, comprenant en outre la détection d'une valeur courante de la propriété interne.

22. Procédé selon la revendication 21, comprenant en outre la production du signal de commande avec un premier niveau lorsque la position obtenue est associée à une valeur supérieure à la valeur courante de la propriété interne, et du signal de commande avec un deuxième niveau lorsque la position obtenue est associée à une valeur inférieure à la valeur courante de la propriété interne.
